(19) Europäisches Patentamt
European Patent Office
Office européen des brevets

(11) Veröffentlichungsnummer: **0 380 975 A2**

(12) **EUROPÄISCHE PATENTANMELDUNG**

(21) Anmeldenummer: **90101054.6**

(22) Anmeldetag: **19.01.90**

(51) Int. Cl.5: **C08L 69/00, //(C08L69/00, 69:00)**

(30) Priorität: **01.02.89 DE 3902916**
**26.10.89 DE 3935639**

(43) Veröffentlichungstag der Anmeldung:
**08.08.90 Patentblatt 90/32**

(84) Benannte Vertragsstaaten:
**BE DE FR GB IT NL**

(71) Anmelder: **BAYER AG**

**D-5090 Leverkusen 1 Bayerwerk(DE)**

(72) Erfinder: **Westeppe, Uwe, Dr.**
**Vogleskamp 72**
**D-4020 Mettmann(DE)**
Erfinder: **Weymans, Günther, Dr.**
**Karl-Arnold-Strasse 4**
**D-5090 Leverkusen(DE)**
Erfinder: **Grigo, Ulrich, Dr.**
**Michelsheide 9**
**D-4152 Kempen 3(DE)**
Erfinder: **Idel, Karsten-Idel, Dr.**
**Am Schwarzkamp 38**
**D-4150 Krefeld(DE)**
Erfinder: **Freitag, Dieter, Dr.**
**Hasenheide 10**
**D-4150 Krefeld(DE)**

(54) **Polycarbonatmischungen hoher Zähigkeit.**

(57) Mischungen, enthaltend p-m′-Bisphenol-A-Polycarbonat und Tetramethyl-Bisphenol-A-Polycarbonat, ausgezeichneter Zähigkeit und Eignung für die Herstellung von Folien, Filamenten und Formteilen sowie ihre Verwendung für die Herstellung von Formteilen.

EP 0 380 975 A2

Xerox Copy Centre

## Polycarbonatmischungen hoher Zähigkeit

Gegenstand der vorliegenden Erfindung sind Mischungen enthaltend

a) 5 bis 70 Gew.-%, vorzugsweise 10 bis 50 Gew.-% und insbesondere 15 bis 40 Gew.-% von Polycarbonaten auf Basis von 2-(4-hydroxyphenyl)-2-(3-hydroxyphenyl)-propan (p, m′-Bisphenol-A),

b) 95 bis 30 Gew.-%, vorzugsweise 90 bis 50 Gew.-% und insbesondere 85 bis 60 Gew.-% auf Basis von Bis-2,2-(4-hydroxy-3,5-dimethylphenyl)-propan (Tetramethyl-bisphenol A), wobei die Summe der Gew.-% aus den Komponenten a) + b) jeweils 100 Gew.-% beträgt.

Polycarbonate auf Basis von p,m′-Bisphenol-A sind solche, die als eingebaute Diphenole 100 Mol-% bis 20 Mol-%, vorzugsweise 100 Mol-% bis 40 Mol-%, insbesondere 100 Mol-% bis 60 Mol-% und ganz besonders bevorzugt 100 Mol-%, bezogen jeweils und die Gesamt molmenge an einkondensierten Diphenole im Polycarbonat der Komponente a), p, m′ -Bisphenol-A einkondensiert enthalten, und jeweils bis zu 100 Mol.-%, bezogen wiederum auf Gesamtmolmenge an einkondensierten Diphenolen im Polycarbonat der Komponente a), andere Diphenole der Formel (I) einkondensiert enthalten,

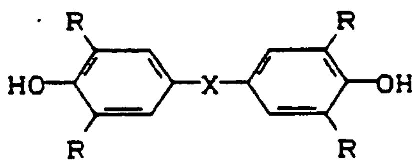

(I)

worin X eine Einfachbindung, $C_1$-$C_8$-Alkylen, $C_2$-$C_8$-Alkyliden, Cycloalkyliden, Cycloalkylen, -S-, -O-, $-SO_2$ und

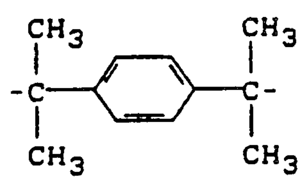

ist und worin R = H, $CH_3$, Cl oder Br ist.

Polycarbonate auf Basis von p,m′-Bisphenol-A sind somit sowohl Homopolycarbonate als auch Copolycarbonate aus p, m′-Bisphenol A.

p, m′-Bisphenol-A ist bekannt (siehe Jap. Anmeldung 87/125 928 vom 25. Mai 1987).

Polycarbonate aus p, m′-Bisphenol-A sind ebenfalls bekannt (siehe Jap. Anmeldung 87/125 928), oder nach bekannten Verfahren herstellbar (siehe beispielsweise H. Schmell, "Chemistry and Physics of Polycarbonates", Polymer Review, Vol. 9, Seite 33 ff, Interscience Publ. 1964).

Geeignete p,m′-Bisphenol-A-Polycarbonate besitzen ein durch Gelpermeationschromatographie in Methylenchlorid gemessenes Molekulargewicht $\overline{M}_w$ (Gewichtsmittel) von mehr als 5.000 g/mol, bevorzugt von 10.000 bis 130.000 g/mol, besonders bevorzugt von 18.000 bis 60.000 g/mol. Ihre molekulare Unheitlichkeit $U = \overline{M}_w / \overline{M}_n - 1$, worin $M_n$ das Zahlenmittel des Molekulargewichts aus der Gelpermeationschromatographie ist, ist 0,05 bis 20, bevorzugt 0,1 bis 10. Die Molekulargewichtsverteilung kann beliebig sein, bevorzugt sind bi- und unimodale Verteilungen, insbesondere unimodale.

Polycarbonate auf Basis von Tetramethylbisphenol-A sind ebenfalls solche, die als eingebaute Diphenole 100 Mol-% bis 20 Mol-%, vorzugsweise 100 Mol-% bis 40 Mol-%, insbesondere 100 Mol-% bis 60 Mol-% und ganz besonders bevorzugt 100 Mol-%, bezogen jeweils auf die Gesamtmenge an einkondensierten Diphenolen im Polycarbonat der Komponente b), Bis-2,2-(4-hydroxy-3,5-dimethyl-phenyl)-propan (Tetramethylbisphenol-A) einkondensiert enthalten, und jeweils bis zu 100 Mol-%, bezogen wiederum auf Ge samtmolmenge an einkondensierten Diphenolen im Polycarbonat der Komponente b), andere Diphenole der Formel (I) einkondensiert enthalten.

Polycarbonate auf Basis von Tetramethylbisphenol-A beziehungsweise Bis-2,2-(4-hydroxy-3,5-dimethylphenyl)propan sind somit sowohl Homopolycarbonate als auch Copolycarbonate aus Bis-2,2-(4)-hydroxy-3,5-dimethylphenyl)-propan.

Die erfindungsgemäß einzusetzenden Polycarbonate auf Basis von Tetramethylbisphenol-A sind ebenfalls bekannt, oder nach bekannten Verfahren herstellbar. (Siehe beispielsweise "Die Angewandte Makromolekulare Chemie" 55 (1976) Seiten 175-189 und die dort zitierte Literatur).

Die Polycarbonate der Komponente b) haben in allgemeinen Molekulargewichte $\overline{M}_w$ von mehr als 15.000 g/mol, bevorzugt 18.000 bis 150.000 und insbesondere von 20.000 bis 80.000 g/mol. Ihre molekulare Uneinheitlichkeit U ist ebenfalls 0,05 bis 20, bevorzugt 0,1 bis 5. Die Molekulargewichtsverteilung ist beliebig, bevorzugt allerdings unimodal.

Die Polycarbonatkomponenten a) und b) können lineare, verzweigte oder zyklische Anteile enthalten. Es kann sogar vorteilhaft sein, gleichzeitig lineare und zyklische Bestandteile vorliegen zu haben. Wichtig ist allerdings, daß die Molekulargewichtsbereiche eingehalten werden.

Die Molekulargewichte $\overline{M}_w$ und $\overline{M}_n$ der Polycarbonatkomponenten b) werden wie die der Polycarbonatkomponenten a) durch Gelpermeationschromatographie in Methylenchlorid in bekannter Weise ermittelt.

Die erfindungsgemäßen Mischungen haben eine deutlich verbesserte Zähigkeit als die beiden einzelnen Polycarbonatkomponenten a) und b).

Aus der DE-OS 2 248 817 sind zwar Mischungen aus den Polycarbonaten auf Basis von Tetramethylbisphenol-A gemäß Komponente b) der erfindungsgemäßen Mischungen mit Bisphenol-A-Polycarbonaten bekannt, die eine verbesserte Schlagzähigkeit aufweisen.

Die erfindungsgemäßen Mischungen zeichnen sich darüberhinaus durch eine besonders hohe Zähigkeit aus.

Für die Brauchbarkeit von Polymeren als Chemiewerkstoffe ist ihre Zähigkeit von ausschlaggebender Bedeutung. Man bestimmt sie durch den Zugversuch. Polymere sind zäh, wenn sie bei der Zugbeanspruchung "shear yielding" ausbilden und spröde, wenn sie unter Ausbidung von "crazing" brechen. Zähe Polymerisate kann man auch nach Erreichen der Yieldspannung(des lokalen Maximums der Zugspannung im Spannungs-Dehnungs-Diagramm; der Zugspannung liegt immer der ursprüngliche Querschnitt der Probe zugrunde) noch weiter dehnen, ohne daß sie brechen. Je größer die Yieldspannung ist, um so zäher ist das Polymer.

Geeignete andere Diphenole der Formel (I) sind beispielsweise
4,4′-Dihydroxydiphenyl,
2,2-Bis-(4-hydroxyphenyl)-propan,
2,4-Bis-(4-hydroxyphenyl)-propan,
2,4-Bis-(4-hyroxyphenyl)-2-methylbutan,
1,1-Bis-(4-hydroxyphenyl)-cyclohexan,
α,α′-Bis-(4-hydroxyphenyl)-p-diisopropylbenzyl,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-3-methylcyclohexan.

Diese Diphenole sind literaturbekannt, ebenso sind daraus hergestellte Polycarbonate literaturbekannt, oder nach literaturbekannten Verfahren herstellbar.

Die erfindungsgemäßen Polycarbonatmischungen aus den Komponenten a) und b) können gegebenenfalls zusätzlich noch andere bekannte Polymere zugemischt enthalten oder in der Polycarbonatchemie übliche Füllstoffe und Additive.

Zur Herstellung der Mischungen aus a) und b) kann man die beiden Bestandteile schmelzen und mischen, die Schmelze dann neu granulieren. Man kann auch die Granulate der Bestandteile mischen und das Granulatgemisch direkt zur Herstellung von Formteilen einsetzen. Für diese Art der Herstellung kann man Extruder, Spritzgußmaschinen oder Schneckenmaschinen verwenden. Es ist auch möglich, a) und b) in Lösungsmitteln zu lösen, die Lösungen zu mischen und das Lösungsmittel wieder zu verdampfen. Aus den so erhaltenen Lösungen kann man auch direkt Folien herstellen. Folien lassen sich auch nach dem üblichen Folienblasverfahren erzeugen. Praktisch alle Verfahren der thermoplastischen Formgebung und Verarbeitung können angewendet werden.

Die Einarbeitung der oben erwähnten anderen Polymeren oder der Füllstoffe oder der Additive kann analog wie vorstehend beschrieben und in prinzipiell bekannten Weise erfolgen.

Aus den erfindungsgemäßen Mischungen kann man Formkörper herstellen, beispielsweise Gehäuse.

Man kann sie auch als Substrate für optische Datenspeicher verwenden oder in Form von Folien als Verpackungsmaterial. Sie können überall da eingesetzt werden, wo Polycarbonat-Formmassen gebraucht werden, die besonders hohe Zähigkeit besitzen.

Beispiele

Substanz 1:

Polycarbonat aus dem p,m'-Isomeren des Bisphenol-A.

Das Bisphenol ist bei Mitsui Petrochemical Industries Ltd., Japan, erhältlich. Man stellt daraus nach H. Schnell, "Chemistry and Physics of Polycarbonates", Polymer Review, Vol. 9, Seite 33ff, Interscience Publ. 1964, das p,m'-Bisphenol-A-Polycarbonat her. Man erhält ein nach Gelpermeationschromatographie gemessenes Molekulargewicht $\overline{M}_w$ = 38.000, eine mit der DSC-Methode (= Differential Scanning Colorimetry) bei einer Aufheizrate von 20 K/min mit 109° C gemessene Glastemperatur.

Substanz 2:

Polycarbonat aus dem Tetramethylbisphenol-A der Formel

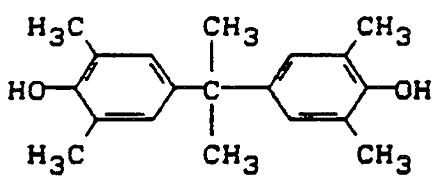
,

hergestellt nach H. Schnell, "Chemistry and Physics of Polycarbonates", Polymer Review, Vol. 9, Seite 33ff, Interscience Publ. 1964 mit $\overline{M}_w$ = 39.300 und einer - wie unter Substanz 1 beschrieben - gemessenen Glastemperatur von 197° C.

Substanz 3:

Wie Substanz 2, jedoch mit $\overline{M}_w$ = 27.100 g/mol.

Substanz 4:

Wie Substanz 1, jedoch mit $\overline{M}_w$ = 37.800 und $\overline{M}_n$ = 7.900 g/mol.

Substanz 5:

Bisphenol-A-Polycarbonat mit $\overline{M}_w$ = 28.000 g/mol, erhalten nach dem für Substanz 2 beschriebenen Verfahren. Glastemperatur aus der DSC-Messung: 145° C.

Messungen:

Vergleiche:

1. Die Yieldspannung der Substanz 5 wurde mit einer Standard-Zugprüfmaschine bei einer Abzugsgeschwindigkeit von 2 mm/min an einem S2-Normstab bei Zimmertemperatur in Luft gemessen. Sie betrug 55 MPa. Der Normstab wurde wie folgt hergestellt: Es wurde die Substanz 5 nach Reinigung getrocknet und dann 5 Minuten bei 220 °C getempert. Anschließend wurde die so behandelte Substanz 5 Minuten bei einem Druck von 200 bar bei gleicher Temperatur gepreßt.

2. Die Substanz 2 wurde 5 Minuten bei 280 °C getempert, anschließend unter von 200 bar Druck 5 Minuten lang zu einem S2-Normstab verpreßt. Wie in Beispiel 1 wurde die Zugfestigkeit gemessen. Da das Material Spröd-Bruch zeigte, wurde keine Yieldspannung, sondern nur eine Maximalspannung gemessen. Sie betrug 36 MPa.

3. In einer Methylenchlorid-Lösung wurden jeweils 5 g der Substanzen 2 und 5 unter Rühren gelöst. Anschließend wurde die Lösung eingedickt. Nach Trocknung im Vakuum bei 70 °C wurde die transparente Harzmasse mit Hilfe der DSC gemessen. Man erhält eine Glastemperatur von 171 °C. Nach 5 Minuten Tempern bei 280 °C wurde die Masse 5 Minuten unter einem Druck von 200 bar bei gleicher Temperatur verpreßt zu einem S2-Zugstab. Wie in Vergleichsbeispiel 1 wurde die Yieldspannung gemessen. Ergebnis: 53 MPa.

4. Die Substanz 1 wird wie in Vergleichsbeispiel 3, jedoch bei 172 °C, zu einem S2-Zugstab verpreßt. Die Yieldspannung beträgt 57 MPa.

Erfindungsgemäß:

1. Wie im Vergleich 1 wurde eine Masse aus einem Gemisch von Substanz 1 mit Substanz 2 im Gewichtsverhältnis 1:1 hergestellt und zu einem Zugstab verpreßt. Die Yieldspannung beträgt 65 MPa.

2. Wie im Vergleich 1 wurde eine Masse aus einem Gemisch von Substanz 1 und Substanz 3 im Gewichtsverhältnis 1:1 hergestellt und zu einem Zugstab verpreßt. Man erhält eine Yieldspannung von 64,5 MPa.

3. Wie in Vergleich 1 wurden 5 g der Substanz 1 mit 15 g der Substanz 2 vermischt und ein Zugstab gepreßt. Man erhält eine Yieldspannung von 71 MPa.

4. Wie in Vergleich 1 wurden 5 g der Substanz 1 und 15 g der Substanz 3 gemischt und ein Zugstab gepreßt. Man erhält eine Yieldspannung von 69,5 MPa.

5. Wie in Vergleich 1 wurden 5 g der Substanz 1 und 15 g der Substanz 4 gemischt und ein Zugstab gepreßt. Man erhält eine Yieldspannung von 68,6 MPa.

## Ansprüche

1. Mischungen enthaltend
a) 5 bis 70 Gew.-% Polycarbonat auf Basis von 2-(4-hydroxyphenyl)-2-(3-hydroxyphenyl)-propan und
b) 95 bis 30 Gew.-% Polycarbonat auf Basis von Bis-2,2-(4-hydroxy-3,5-dimethylphenyl)-propan,
wobei die Summe der Gew.-% aus den Komponenten a) + b) jeweils 100 Gew.-% beträgt.

2. Mischungen nach Anspruch 1, worin (a) ein $\overline{M}_w$ von 10.000 bis 130.000 g/mol und (b) ein $\overline{M}_w$ von 18.000 bis 150.000 g/mol hat.

3. Mischungen nach Anspruch 1, worin (a) und (b) eine molekulare Uneinheitlichkeit von 0,05 bis 20 haben.

4. Verwendung der Mischungen nach Anspruch 1 zur Herstellung von Formteilen.

5. Formteile aus den Mischungen nach Anspruch 1.